# EUROPÄISCHE PATENTSCHRIFT

(11) **EP 2 873 921 B1**
(45) Veröffentlichungstag und Bekanntmachung des Hinweises auf die Patenterteilung: **11.01.2017**
(21) Anmeldenummer: 14192087.6
(22) Anmeldetag: 06.11.2014
(51) Int. Cl.: F23R 3/00, B29C 65/48

(54) **Brennkammerhitzeabschirmelement einer Gasturbine**
Combustion chamber heat shield element of a gas turbine
Élément de protection contre la chaleur d'une chambre de combustion d'une turbine à gaz

(30) Priorität: 14.11.2013 DE 102013223258
(43) Veröffentlichungstag der Anmeldung: 20.05.2015
(73) Patentinhaber: Rolls-Royce Deutschland Ltd & Co KG, 15827 Blankenfelde-Mahlow (DE)
(72) Erfinder: Clemen, Carsten Dr.-Ing., 15749 Mittenwalde (DE)
(74) Vertreter: Hoefer & Partner Patentanwälte mbB

(56) Entgegenhaltungen:
- EP-A1- 2 423 596
- US-A1- 2011 030 378
- US-B2- 7 393 488

## Beschreibung

Die Erfindung bezieht sich auf Gasturbinenbrennkammern mit Brennkammerschindeln und/oder Hitzeschildern, wobei die Brennkammerschindeln oder Hitzeschilder an einer tragenden Struktur der Brennkammeraußenwände bzw. am Brennkammerkopf befestigt sind.

Die Brennkammerschindeln weisen eine beliebige (sehr hohe, oftmals mehrere Tausend) Anzahl von Effusionskühllöchern auf der zur Brennkammer gerichteten Seite auf. Diese Effusionskühllöcher dienen dazu, die Schindel gegenüber den hohen Temperaturen in der Brennkammer zu kühlen. Darüber hinaus kann sich auf der Brennkammerschindel mindestens ein Mischluftloch befinden, das dazu dient, Luft aus dem die Brennkammer außen umgebenden Raum (Ringkanal/Annulus) in die Brennkammer zum Zwecke des Abkühlens und Abmagerns der Verbrennung und damit der Reduktion der NOx Entstehung in die Brennkammer zu leiten. Neben der Kühlung durch die Effusionskühllöcher sind die Schindeln häufig noch mit einer keramischen Beschichtung versehen, die als Dämmschicht gegen die hohen Temperaturen in der Brennkammer wirkt.

Die Hitzeschilder weisen eine beliebige (sehr hohe) Anzahl von Effusionskühllöchern auf der zur Brennkammer gerichteten Seite auf. Diese Löcher dienen dazu, das Hitzeschild gegenüber den hohen Temperaturen in der Brennkammer zu kühlen.

Die Befestigung der Brennkammerschindel an der Brennkammeraußenwand bzw. der Hitzeschilder am Brennkammerkopf erfolgt gemäß dem Stand der Technik zum Beispiel durch Gewindestifte, die integraler Bestandteil der Schindel/des Hitzeschildes sind und ein Gewinde aufweisen. Durch ein Loch in der Brennkammeraußenwand bzw. am Brennkammerkopf und mittels einer Mutter werden sie an der Brennkammeraußenwand bzw. an dem Brennkammerkopf fixiert.

Die weiteren Erläuterungen beziehen sich auf die Brennkammerschindel, das Prinzip und die Anordnung gelten gleichermaßen für Hitzeschilder.

Diese Anordnung ist aus dem Stand der Technik bekannt, siehe EP 972 992 B1, DE 102 14 570 A1 oder US 6 145 319 A.

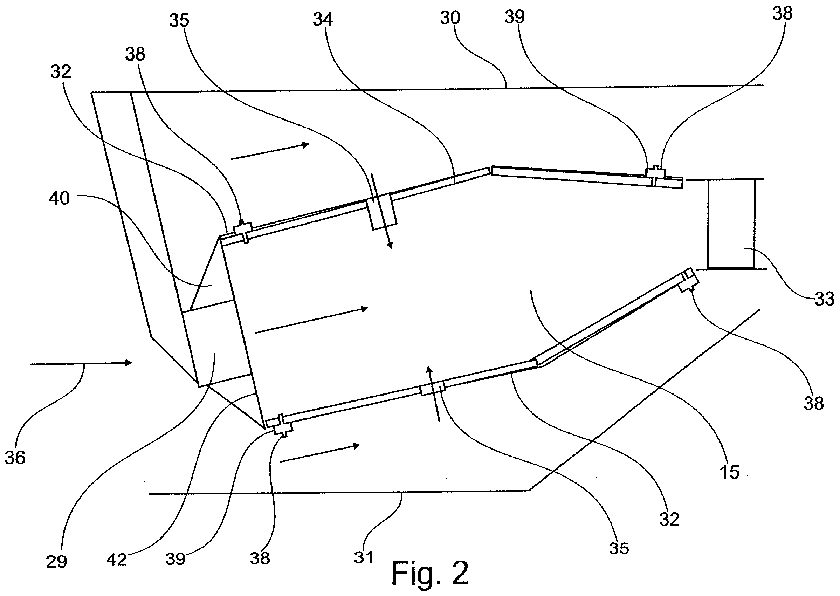

Die Figur 2 zeigt schematisch eine Brennkammer 15. Die Brennkammer 15 umfasst eine Treibstoffdüse 29, welche in üblicher Weise an einem Brennkammerkopf 40 gehaltert ist, welcher mit zumindest einem Hitzeschild 42 versehen ist. Weiterhin sind ein Brennkammeraußengehäuse 30 sowie ein Brennkammerinnengehäuse 31 vorgesehen. Eine Brennkammerwand 32 umschließt die eigentliche Brennkammer 15 und trägt Brennkammerschindeln 34. Das Bezugszeichen 33 zeigt schematisch eine Turbinenvorleitreihe. Durch Zumischlöcher 35 wird in üblicher Weise Luft zugeführt. Die Zuströmrichtung ist mit dem Bezugszeichen 36 bezeichnet.

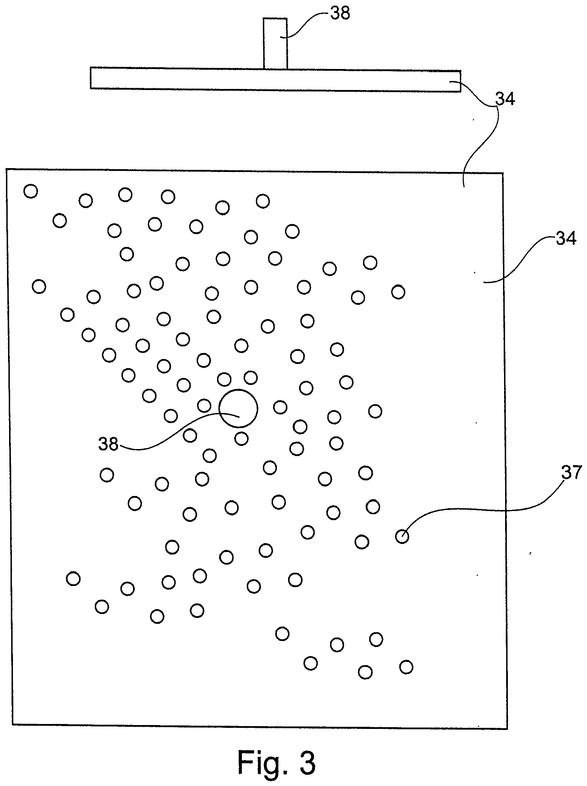

Die Figur 3 zeigt eine Schindel 34 mit Effusionskühllöchern 37 gemäß dem Stand der Technik. Die Geometrie (Durchmesser, Form) des Zumischlochs 35 kann, wie aus dem Stand der Technik bekannt, in geeigneter Weise ausgebildet werden. Gleiches trifft für die Größe und Anordnung der Effusionskühllöcher 37 zu. Die Ausbildung der Zumischlöcher 35 erfolgt häufig so, dass diese konstruktiv wie ein Trichter oder ein Rohr, das in die Brennkammer 15 hineinragt, ausgebildet sind.

Die Herstellung der Schindeln 34 erfolgt üblicherweise entweder durch Gießen, Beschichten mit einer keramischen Schicht und Bohren der Effusionskühllöcher 37 (z.B. mit Laser) oder durch Gießen, Bohren und Beschichten oder durch ein additives Fertigungsverfahren, wie z.B. Selective Laser Sintering, Direct Laser Depositioning oder mittels Elektronenstrahlauftragsschweißen. Bei den additiven Verfahren werden dabei die Effusionskühllöcher 37 direkt in die Schindel 34 eingebracht und das aufwändige Bohren entfällt.

Während des Betriebs treten immer wieder Probleme mit sogenanntem Kriechen des Materials auf, welches zum Versagen des Gewindestiftes führen kann und damit zu einem Verlust der Schindel.

Darüber hinaus ist die Konstruktion der Schindel mit integriertem Gewindestift nur bedingt für eine additive Fertigung, z.B. Selective Laser Sintering, Direct Laser Depositioning oder Elektronenstrahlauftragsschweißen, geeignet, da entweder die kostenintensive horizontale Fertigung gewählt werden muss oder eine aufwändige Unterkonstruktion zur Abstützung des Gewindestiftes vorgesehen werden muss. Eine solche Unterkonstruktion hat wesentliche Nachteile. Sie ist a) materialintensiv, b) sie verlängert den Fertigungsprozess und c) sie muss nach der Fertigung von der Schindel entfernt werden. Dies ist sehr kostenintensiv.

Die EP 2 423 596 A1 beschreibt ein Hitzeschildelement, welches mittels Bolzen befestigt wird. Die Bolzen werden mit dem Bolzenkopf in Ausnehmungen des Hitzeschildelementes eingehängt und sind mit dem Hitzeschildelement nicht direkt verbunden. Um zu verhindern, dass die Bolzen bei der Montage abfallen, kann zusätzlich ein Klebeband als Montagesicherung eingesetzt werden.

Die US 2011/030378 A1 beschreibt die Befestigung von Brennkammerschindeln mittels Bolzen, welche von der kalten Seite der Brennkammerwand aus in Gewindeausnehmungen der Schindeln eingeschraubt werden.

Aus der US 7 393 488 B2 ist es ganz allgemein bekannt, dass bolzenartige Elemente mit zylindrischen Hülsen von Bauteilen verklebt werden können.

Der Erfindung liegt die Aufgabe zugrunde, ein Brennkammerhitzeabschirmelement, insbesondere eine Brennkammerschindel oder ein Hitzeschild einer Gasturbine und eine Befestigungsmöglichkeit einer derartigen Brennkammer zu schaffen, welche bei einfachem Aufbau und einfacher, kostengünstiger Herstellbarkeit die Nachteile des Standes der Technik vermeiden und eine gute Befestigbarkeit gewährleisten.

Erfindungsgemäß wird die Aufgabe durch die Merkmalskombination des Anspruches 1 gelöst, die Unteransprüche zeigen weitere vorteilhafte Ausgestaltungen der Erfindung.

Erfindungsgemäß ist somit vorgesehen, dass das Brennkammerhitzeabschirmelement im Wesentlichen plattenförmig ausgebildet ist und an einer Seite zumindest ein als separates Bauteil ausgebildeter Bolzen mittels einer Klebeverbindung verankert ist.

Durch die erfindungsgemäß vorgesehene Ausgestaltung wird zum einen eine sichere Befestigung des Bolzens an dem Brennkammerhitzeabschirmelement gewährleistet. Zum anderen ergibt sich eine einfache und kostengünstige Herstellbarkeit.

Bevorzugterweise ist erfindungsgemäß das Brennkammerhitzeabschirmelement in Form einer Brennkammerschindel oder in Form eines Hitzeschildes ausgebildet.

Das erfindungsgemäße Brennkammerhitzeabschirmelement ist somit so ausgebildet, dass ein separater Bolzen, der erfindungsgemäß ein Gewindebolzen oder ein mit einem Sicherungselement zu befestigender Bolzen sein kann, an dem Brennkammerhitzeabschirmelement mittels einer Klebeverbindung verankert wird. Somit ist es erfindungsgemäß möglich, den Bolzen aus einem anderen Material zu fertigen, als das Brennkammerhitzeabschirmelement. Weiterhin ist es möglich, für das Brennkammerhitzeabschirmelement ein einfaches und kostengünstiges Herstellungsverfahren zu wählen, da der Bolzen als separates Bauteil hergestellt werden kann. Insbesondere durch die Möglichkeit, für das Brennkammerhitzeabschirmelement und den Bolzen unterschiedliche Materialien zu verwenden, ist es möglich, die beim Stand der Technik bekannten Befestigungsprobleme zu lösen und ein Kriechen des Bolzen-Werkstoffs zu unterbinden oder zu minimieren.

Erfindungsgemäß ist das Brennkammerhitzeabschirmelement mit einer Aufnahme für den Bolzen versehen.

Die Aufnahme kann beispielsweise in Form einer erhabenen Lageranordnung oder Ähnlichem bestehen und ist so ausgebildet, dass eine passgenaue und/oder formschlüssige Aufnahme des Bolzens in einer Ausnehmung der Aufnahme möglich ist, um die nachfolgende Verklebung des Bolzens in korrekter Positionierung des Bolzens zu ermöglichen.

Zur Kühlung ist es weiterhin besonders vorteilhaft, wenn das Brennkammerhitzeabschirmelement mit Effusionskühllöchern versehen sind.

Erfindungsgemäß ist die Aufnahme des Brennkammerhitzeabschirmelements zur Kühlung mit Effusionskühllöchern versehen.

Der erfindungsgemäße Bolzen kann so ausgebildet sein, dass er nur über einen Teilbereich seiner Länge mit einem Gewinde versehen ist, so dass der mit der Aufnehmung zu verklebende Endbereich ohne Gewinde ausgestaltet ist. Dieser Endbereich kann beliebig konturiert werden, passend zur Konturierung der Ausnehmung in der Aufnahme, beispielsweise rund, mehreckig, oval, abgewinkelt oder abgeflacht. In gleicher Weise kann die Aufnahme ausgebildet werden.

Weiterhin ist es erfindungsgemäß möglich, die Außenkontur der Aufnahme, welche an dem Brennkammerhitzeabschirmelement befestigt ist, strömungsgünstig auszubilden, beispielsweise mit abgeschrägten Flanken zu versehen. In der Aufnahme können erfindungsgemäß auch Effusionskühllöcher ausgebildet sein, um die Kühlung der Brennkammerhitzeabschirmelements zu gewährleisten.

Der erfindungsgemäße Bolzen wird in üblicher Weise durch ein Loch der Brennkammeraußenwand gesteckt, so dass sich die eigentliche Befestigung des Bolzens nicht wesentlich vom Stand der Technik unterscheidet. So ist es möglich, bei einem Gewindebolzen in üblicher Weise eine Mutter aufzuschrauben.

Die erfindungsgemäße Ausgestaltung ermöglicht es auch, das Brennkammerhitzeabschirmelement gegenüber der Brennkammerwand abzustützen oder in alternativer Ausgestaltung das Brennkammerhitzeabschirmelement direkt an die Brennkammerwand oder den Brennkammerkopf anzulegen. Somit können unterschiedliche Kühlkonzepte ausgebildet werden, so wie dies auch aus dem Stand der Technik bekannt ist.

Erfindungsgemäß erfolgt die Klebeverbindung bevorzugt mittels eines hochtemperaturbeständigen Metallklebers, welcher Temperaturen von 1000°C oder höher ermöglicht. Alternativ hierzu ist es auch möglich, den Bolzen zusätzlich zu der Klebeverbindung, die dann gegebenenfalls nur als temporäre Klebeverbindung zu Montagezwecken dient, mittels eines weiteren Fügeverfahren, beispielsweise Schweißen, Löten, Klemmen, oder Ähnlichem, mit dem Brennkammerhitzeabschirmelement zu verbinden.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung,
- Fig. 2: eine schematische Seitenansicht (im Schnitt) einer Brennkammer gemäß dem Stand der Technik,
- Fig. 3: eine Draufsicht und eine Seitenansicht einer aus dem Stand der Technik bekannten Brennkammerschindel,
- Fig. 4: eine Seiten-Schnittansicht einer Befestigungsmöglichkeit einer Brennkammerschindel an der Brennkammeraußenwand gemäß dem Stand der Technik,
- Fig. 5: eine vereinfachte Ansicht eines Hitzeschildes zur Verwendung bei der Erfindung mit Bolzen und Effusionskühllöchern,
- Fig. 6: schematische Seitenansichten und Draufsichten unterschiedlicher Ausgestaltungen des erfindungsgemäßen Bolzens,
- Fig. 7: Seitenansichten und Draufsichten unterschiedlicher Ausgestaltungsformen des erfindungsgemäßen Brennkammerhitzeabschirmelements mit Aufnahmen,
- Fig. 8: eine Darstellung eines Ausführungsbeispiels mit Brennkammerhitzeabschirmelement und Abstützung zur Brennkammerwand,
- Fig. 9: eine Ansicht, analog Fig. 8, mit direkter Anlage der Abstützung an der Brennkammerwand,
- Fig. 10: schematische Seitenansichten und Draufsichten von Ausführungsbeispielen mit Effusionskühllöchern, und
- Fig. 11 und 12: vereinfachte Seitenansichten, analog den Fig. 8 und 9, mit Sicherung des Bolzens mittels Sicherungsstift.

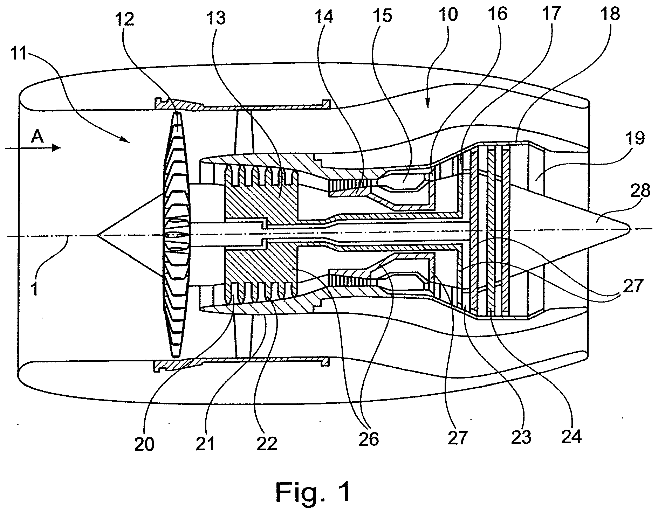

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Mitteldruckkompressor 13, einen Hochdruckkompressor 14, Brennkammern 15, eine Hochdruckturbine 16, eine Mitteldruckturbine 17 und eine Niederdruckturbine 18 sowie eine Abgasdüse 19, die sämtlich um eine zentrale Triebwerksachse 1 angeordnet sind.

Der Mitteldruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Mitteldruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

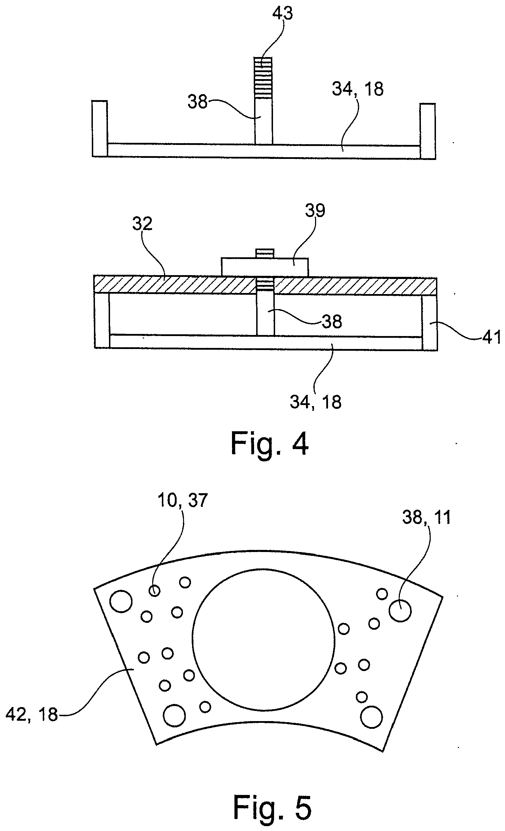

Die Fig. 4 zeigt unterschiedliche Seitenansichten gemäß dem Stand der Technik, in denen eine Abstützung 41 der Brennkammerschindel 34 gegen die Brennkammerwand 32 dargestellt ist. Die Fig. 5 zeigt ein Hitzeschild 42 gemäß dem Stand der Technik, mit Bolzen 38 und Effusionskühllöchern 37.

Die Fig. 5 zeigt ein Hitzeschild gemäß dem Stand der Technik mit Bolzen 38 und Effusionskühllöchern 37 sowie mit einer zentrischen Ausnehmung für eine Treibstoffdüse (s. Fig. 2).

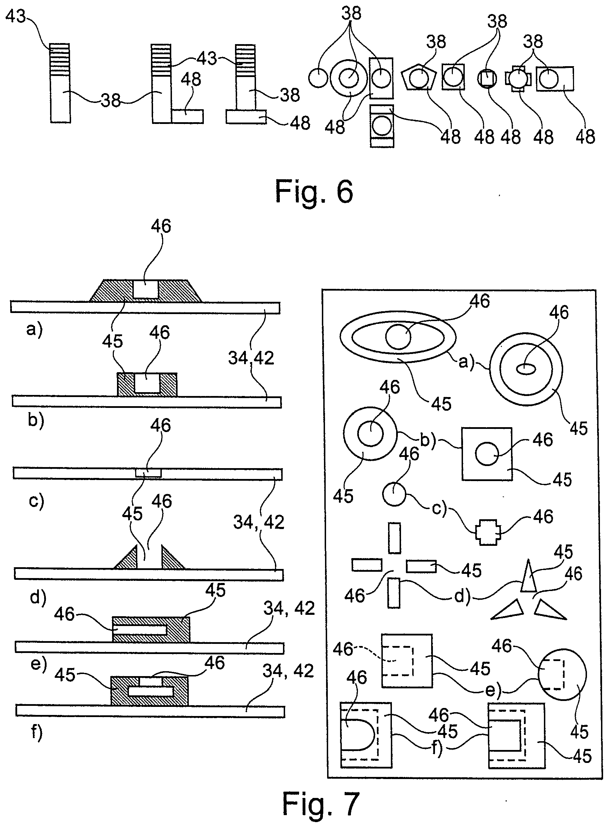

Die Fig. 6 zeigt in den drei linken Darstellungen schematische Seitenansichten von Ausführungsbeispielen des erfindungsgemäßen Bolzens 38. Die rechte Bildhälfte der Fig. 6 zeigt unterschiedliche Draufsichten auf den Bolzen 38. Dabei ist insbesondere ersichtlich, dass der Bolzen 38 einen konturierten Fuß 48 aufweisen kann, welcher in unterschiedlichster Form ausgebildet sein kann, nämlich als runder Flansch, durch rechteckige Vorsprünge, in polygonaler Form oder in anderer Ausgestaltung.

Die Fig. 7 zeigt in schematischer Darstellung in der linken Bildhälfte vereinfachte Schnittansichten von Ausführungsbeispielen des erfindungsgemäßen Brennkammerhitzeabschirmelements 34, 42 sowie der darauf befestigten Aufnahme 45. Diese ist mit einer Ausnehmung 46 versehen, in welche ein konturierter Fuß 48 des Bolzens 38 einführbar und verklebbar ist. Ebenso wie das Brennkammerhitzeabschirmelement 34, 42 kann die Aufnahme 45 mit der Ausnehmung 46 einstückig mit dem Brennkammerhitzeabschirmelement hergestellt werden, beispielsweise mittels eines additiven Herstellungsverfahrens, siehe oben.

Die rechte Bildhälfte der Fig. 7 zeigt jeweils Draufsichten auf unterschiedliche Ausgestaltungsformen der Aufnahme 45 bzw. der zugehörigen Ausnehmung 46. Die kleinen Buchstaben a bis f korrespondieren jeweils zu den Seitenansichten bzw. Draufsichten.

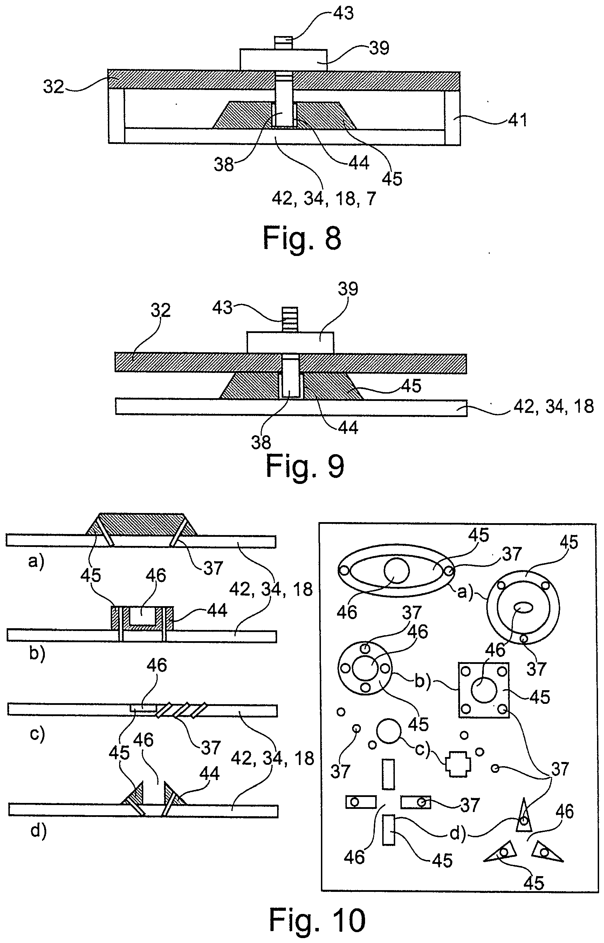

Die Fig. 8 und 9 zeigen unterschiedliche erfindungsgemäße Ausführungsbeispiele. Gemäß Fig. 8 ist das Brennkammerhitzeabschirmelement 34, 42 mittels Abstützungen 41 von der Brennkammerwand 32 beabstandet. Somit ergibt sich zwischen der Aufnahme 45 und der Brennkammerwand 32 ein Zwischenraum. Bei dem Ausführungsbeispiel der Fig. 9 liegt die Aufnahme 45 direkt gegen die Brennkammerwand 32 an.

Das Bezugszeichen 44 zeigt jeweils die Klebeverbindung zur Verankerung des Bolzens 38 an der Aufnahme 45.

Die Fig. 10 zeigt Ausführungsbeispiele von Effusionskühllöchern 37, welche insbesondere angrenzend an die Aufnahme 45 oder direkt in der Aufnahme 45 ausgebildet sind. Die linken Darstellungen der Fig. 10 zeigen jeweils vereinfachte Seiten-Schnittansichten, während die rechte Hälfte der Fig. 10 zugeordnete Draufsichten zeigt, so wie sich dies durch die kleinen Buchstaben a bis d ergibt.

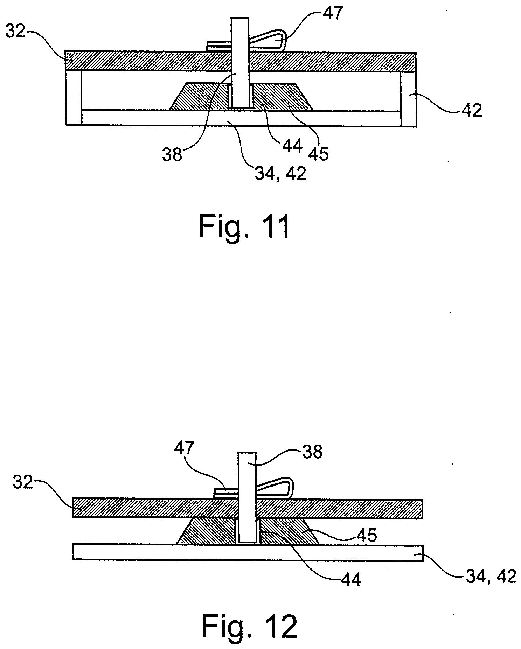

Die Fig. 11 und 12 zeigen, in analoger Darstellung der Fig. 8 und 9, eine weitere Ausgestaltungsvariante, bei welcher der Bolzen 38 nicht mit einem Gewinde versehen ist, sondern mittels eines Sicherungsstiftes 47 gehalten wird.

### Bezugszeichenliste:

- 1: Triebwerksachse
- 10: Gasturbinentriebwerk
- 11: Lufteinlass
- 12: im Gehäuse umlaufender Fan
- 13: Mitteldruckkompressor
- 14: Hochdruckkompressor
- 15: Brennkammer
- 16: Hochdruckturbine
- 17: Mitteldruckturbine
- 18: Niederdruckturbine
- 19: Abgasdüse
- 20: Leitschaufeln
- 21: Triebwerksgehäuse
- 22: Kompressorlaufschaufeln
- 23: Leitschaufeln
- 24: Turbinenschaufeln
- 26: Kompressortrommel oder -scheibe
- 27: Turbinenrotornabe
- 28: Auslasskonus
- 29: Treibstoffdüse
- 30: Brennkammeraußengehäuse
- 31: Brennkammerinnengehäuse
- 32: Brennkammerwand
- 33: Turbinenvorleitreihe
- 34: Brennkammerschindel
- 35: Zumischloch
- 36: Zuströmrichtung
- 37: Effusionskühlloch
- 38: Bolzen
- 39: Mutter
- 40: Brennkammerkopf
- 41: Abstützung
- 42: Hitzeschild
- 43: Gewinde
- 44: Klebeverbindung
- 45: Aufnahme
- 46: Ausnehmung
- 47: Sicherungsstift
- 48: Fuß

## Patentansprüche

1. Brennkammerhitzeabschirmelement einer Gasturbine mit einem Bolzen (38) zur Lagerung des Brennkammerhitzeabschirmelements (34, 42) an einer Brennkammerwand (32) oder einem Brennkammerkopf (40), wobei das Brennkammerhitzeabschirmelement (34, 42) im Wesentlichen plattenförmig ausgebildet ist, **dadurch gekennzeichnet, dass** an einer Seite des Brennkammerhitzeabschirmelements (34, 42) zumindest ein als separates Bauteil ausgebildeter Bolzen (38) mittels einer Klebeverbindung (44) verankert ist, wobei das Brennkammerhitzeabschirmelement (34, 42) mit einer Aufnahme (45) für den mit einem konturierten Fuß (48) versehenen Bolzen (38) versehen ist, wobei die Aufnahme (45) mit einer Ausnehmung (46), welche zur passgenauen und/oder formschlüssigen Einführung und Verklebung (44) des Bolzens (38) ausgebildet ist und mit Effusionskühllöchern (37) versehen ist.

2. Brennkammerhitzeabschirmelement nach Anspruch 1, **dadurch gekennzeichnet, dass** der Bolzen (38) an seinem in die Aufnahme (45) einführbaren Endbereich nicht mit einem Gewinde versehen ist.

3. Brennkammerhitzeabschirmelement nach einem der Ansprüche 1 oder 2, **dadurch gekennzeichnet, dass** die Aufnahme (45) einstückig mit dem Brennkammerhitzeabschirmelement (34, 42) ausgebildet ist.

4. Brennkammerhitzeabschirmelement nach einem der Ansprüche 1 bis 3, **dadurch gekennzeichnet, dass** dieses mittels eines additiven Herstellungsverfahrens hergestellt ist.

5. Brennkammerhitzeabschirmelement nach einem der Ansprüche 1 bis 4, **dadurch gekennzeichnet, dass** die Klebeverbindung (44) einen hochtemperaturbeständigen Metallkleber umfasst.

6. Brennkammerhitzeabschirmelement nach einem der Ansprüche 1 bis 5, **dadurch gekennzeichnet, dass** der Bolzen (38) zusätzlich zu der Klebeverbindung (44) mittels eines weiteren Fügeverfahrens an dem Brennkammerhitzeabschirmelement (34, 42) befestigt ist.

7. Brennkammerhitzeabschirmelement nach einem der Ansprüche 1 bis 6, **dadurch gekennzeichnet, dass** das Brennkammerhitzeabschirmelement (34, 42) angrenzend an die Aufnahme (45) mit Effusionskühllöchern (37) versehen ist.

8. Brennkammerhitzeabschirmelement nach einem der Ansprüche 1 bis 7, **dadurch gekennzeichnet, dass** dieses in Form einer Brennkammerschindel (34) oder eines Hitzeschildes (42) ausgebildet ist.

## Claims

1. Combustion chamber heat-shielding element of a gas-turbine, having a bolt (38) for mounting the combustion chamber heat-shielding element (34, 42) on a combustion chamber wall (32) or a combustion chamber head (40), where the combustion chamber heat-shielding element (34, 42) is designed substantially plate-like, **characterized in that** on one side of the combustion chamber heat-shielding element (34, 42) at least one bolt (38), which is designed as a separate component, is anchored by means of a bonded connection (44), where the combustion chamber heat-shielding element (34, 42) is provided with a receptacle (45) for the bolt (38) provided with a contoured base (48), where the receptacle (45) is provided with a recess (46) designed for precisely and/ or positively fitting insertion and bonding (44) of the bolt (38), and with effusion cooling holes (37).

2. Combustion chamber heat-shielding element in accordance with Claim 1, **characterized in that** the bolt (38) on its end area that can be inserted into the receptacle (45) is not provided with a thread.

3. Combustion chamber heat-shielding element in accordance with one of the Claims 1 or 2, **characterized in that** the receptacle (45) is designed in one piece with the combustion chamber heat-shielding element (34, 42).

4. Combustion chamber heat-shielding element in accordance with one of the Claims 1 to 3, **characterized in that** the latter is manufactured by means of an additive manufacturing method.

5. Combustion chamber heat-shielding element in accordance with one of the Claims 1 to 4, **characterized in that** the bonded connection (44) includes a high-temperature resistant metal adhesive.

6. Combustion chamber heat-shielding element in accordance with one of the Claims 1 to 5, **characterized in that** the bolt (38), additionally to the bonded connection (44), is fastened to the combustion chamber heat-shielding element (34, 42) by means of a further joining method.

7. Combustion chamber heat-shielding element in accordance with one of the Claims 1 to 6, **characterized in that** the combustion chamber heat-shielding element (34, 42) adjacent to the receptacle (45) is provided with effusion cooling holes (37).

8. Combustion chamber heat-shielding element in accordance with one of the Claims 1 to 7, **characterized in that** the latter is designed in the form of a combustion chamber tile (34) or of a heat shield (42).

## Revendications

1. Élément de protection thermique de chambre de combustion d'une turbine à gaz, avec un boulon (38) destiné à loger l'élément de protection thermique de chambre de combustion (34, 42) à une paroi de chambre de combustion (32) ou à une tête de chambre de combustion (40), l'élément de protection thermique de chambre de combustion (34, 42) étant conçu pour l'essentiel en forme de plaque, **caractérisé en ce que** sur un côté de l'élément de protection thermique de chambre de combustion (34, 42) est ancré par assemblage collé (44) au moins un boulon (38) en tant que composant distinct, sachant que l'élément de protection thermique de chambre de combustion (34, 42) est muni d'un logement (45) pour le boulon (38) lui-même doté d'un pied (48) chantourné, le logement (45) étant muni d'un évidement (46), lequel est conçu pour une insertion et un collage (44) du boulon (38) avec précision et/ ou par complémentarité de forme, et de trous de refroidissement par effusion (37).

2. Élément de protection thermique de chambre de combustion selon la revendication n° 1, **caractérisé en ce que** le boulon (38) n'est pas muni d'un filetage à son extrémité insérable dans le logement (45).

3. Élément de protection thermique de chambre de combustion selon une des revendications n° 1 ou n° 2, **caractérisé en ce que** le logement (45) est formé en une seule pièce avec l'élément de protection thermique de chambre de combustion (34, 42).

4. Élément de protection thermique de chambre de combustion selon une des revendications n° 1 à n° 3, **caractérisé en ce que** ledit élément est fabriqué au moyen d'un procédé de fabrication additif.

5. Élément de protection thermique de chambre de combustion selon une des revendications n° 1 à n° 4, **caractérisé en ce que** l'assemblage collé (44) comprend une colle pour métaux à haute résistance thermique.

6. Élément de protection thermique de chambre de combustion selon une des revendications n° 1 à n° 5, **caractérisé en ce qu'**en supplément de l'assemblage collé (44), le boulon (38) est fixé à l'élément de protection thermique de chambre de combustion (34, 42) par un autre procédé d'assemblage.

7. Élément de protection thermique de chambre de combustion selon une des revendications n° 1 à n° 6, **caractérisé en ce que** l'élément de protection thermique de chambre de combustion (34, 42) est pourvu, en jouxtant le logement (45), avec des trous de refroidissement par effusion (37).

8. Élément de protection thermique de chambre de combustion selon une des revendications n° 1 à n° 7, **caractérisé en ce que** ledit élément est conçu sous la forme d'un bardeau de chambre de combustion (34) ou d'un écran thermique (42).
